# EUROPÄISCHE PATENTSCHRIFT

(11) **EP 4 092 400 B1**
(45) Veröffentlichungstag und Bekanntmachung des Hinweises auf die Patenterteilung: **23.04.2025**
(21) Anmeldenummer: 22173676.2
(22) Anmeldetag: 17.05.2022
(51) Int. Cl.: G01M 17/007, G01G 1/00, G01M 17/06, G01G 19/00, G01G 19/02, G01B 5/255, G01B 7/315, G01B 11/275

(54) **DREHUNTERSATZ ZUR FAHRWERKSVERMESSUNG SOWIE FAHRWERKSVERMESSUNGSEINRICHTUNG DAMIT**
BOGIE FOR RUNNING GEAR MEASUREMENT AND RUNNING GEAR MEASURING DEVICE USING THE SAME
BÂTI TOURNANT DESTINÉ À LA MESURE DU CHÂSSIS, AINSI QUE DISPOSITIF DE MESURE DU CHÂSSIS CORRESPONDANT

(30) Priorität: 21.05.2021 DE 102021113304
(43) Veröffentlichungstag der Anmeldung: 23.11.2022
(73) Patentinhaber: Beissbarth Automotive Testing Solutions GmbH, 80993 München (DE)
(72) Erfinder: Legen, Johann, 80993 München (DE); Schlehuber, Felix, 80993 München (DE); Scheel, Daniel, 80993 München (DE)
(74) Vertreter: Schmitt-Nilson Schraud Waibel Wohlfrom Patentanwälte Partnerschaft mbB

(56) Entgegenhaltungen:
- DE-A1- 10 043 359
- US-A- 6 047 594
- US-A1- 2020 216 297

## Beschreibung

Die vorliegende Erfindung betrifft einen Drehuntersatz zur Fahrwerksvermessung für einen Kraftfahrzeug-Messplatz oder für eine Kraftfahrzeug-Hebebühne sowie eine Fahrwerksvermessungseinrichtung mit einem Kraftfahrzeug-Messplatz oder einer Kraftfahrzeug-Hebebühne und einem solchen Drehuntersatz.

Bei der Fahrwerksvermessung auf einem Kraftfahrzeug-Messplatz oder einer Kraftfahrzeug-Hebebühne kommen häufig Drehplatten, z. B. für die Vorderräder des Kraftfahrzeugs, zum Einsatz, auf denen die Räder des Kraftfahrzeugs abgestützt werden und mittels derer die Fahrzeugräder gedreht werden können, um z. B. den maximalen Lenkeinschlagwinkel zu ermitteln.

Aus der EP 1 184 641 B1 ist ein Verfahren zur Fahrwerksvermessung mit einer Fahrwerksvermessungseinrichtung und eine Fahrwerksvermessungseinrichtung mit Messköpfen zur Bestimmung der Radstellungen der Räder eines Kraftfahrzeuges auf einem Messplatz bekannt. Aus dem Radstellungen der Räder werden durch die Fahrwerksvermessungseinrichtung die fahrwerkspezifischen Daten, wie geometrische Fahrachse, Sturz, Spur- und Radversatz bestimmt. Durch Wiegeeinheiten, die in den Schiebe- und/oder Drehplatten angeordnet sein können, werden Radaufstandkräfte des Fahrzeugs gemessen, Messgrößen wie Radlast, Achslast, Gesamtgewicht, Radlast- und Achslastverteilung berechnet und der daraus ermittelte Beladungszustand des Kraftfahrzeugs in die Fahrwerksvermessung mit einbezogen.

Die Installation der in der EP 1 184 641 B1 gezeigten Dreh- und Schiebeplatten ist aufwändig. Zudem sind die dort gezeigten Dreh- und Schiebeplatten anfällig für Beschädigungen, wenig benutzerfreundlich und schwierig austauschbar.

Aus der US 6 047 594 A ist eine digitale Drehplattenvorrichtung zum Ausrichten von Lenksystemen von Fahrzeugen gemäß dem Oberbegriff von Anspruch 1 bekannt.

Die DE 100 43 359 A1 zeigt ein Verfahren zur Fahrwerksvermessung sowie eine Fahrwerksvermessungseinrichtung, das bzw. die eine mit der Fahrwerksvermessungseinrichtung gekoppelte Wiegeeinrichtung zur Messung der Radaufstandskräfte des Fahrzeugs umfasst.

Es ist daher eine Aufgabe der vorliegenden Erfindung, einen Drehuntersatz zur Fahrwerksvermessung anzugeben, der einfach installiert und in Betrieb genommen werden kann und der auch einfach ausgetauscht werden kann, falls erforderlich. Zudem soll dieser Drehuntersatz eine hochgenaue Fahrwerksvermessung ermöglichen und benutzerfreundlich ausgebildet sein.

Des Weiteren soll eine Fahrwerksvermessungseinrichtung mit einem Kraftfahrzeug-Messplatz oder einer Kraftfahrzeug-Hebebühne und mit wenigstens einem Drehuntersatz angegeben werden, die einfach installiert und in Betrieb genommen werden kann, die eine hochpräzise Fahrwerksvermessung ermöglicht und gleichzeitig besonders benutzerfreundlich ausgebildet ist.

Diese Aufgaben werden durch den Gegenstand des unabhängigen Anspruchs gelöst. Vorteilhafte Weiterbildungen ergeben sich aus den abhängigen Patentansprüchen.

Ein erfindungsgemäßer Drehuntersatz ist in Anspruch 1definiert.

Mit einem solchen Drehuntersatz können die von dem Kraftfahrzeugrad auf die Drehplatte wirkenden Radaufstandskräfte präzise mittels der Wiegeeinrichtung gemessen werden.

Ein solcher Drehuntersatz ermöglicht mittels der drehbaren Drehplatte beliebige Drehpositionen des Kraftfahrzeugrads für eine präzise Fahrwerksvermessung.

Dadurch, dass der Drehuntersatz mobil und unverkabelt ausgebildet ist, kann dieser auf einfache Weise installiert und in Betrieb genommen sowie bei Bedarf deinstalliert und ausgetauscht bzw. weggeräumt werden, ohne dass hierfür umständliche Ver- oder Entkabelungsarbeiten ausgeführt werden müssen.

Die lokale Sendeeinheit versendet die gemessene Radaufstandskraft per Funk an eine Einheit einer Fahrwerksvermessungseinrichtung.

Bei einer solchen Einheit einer Fahrwerksvermessungseinrichtung, an welche die gemessene Radaufstandskraft und insbesondere auch der gemessene Drehwinkel/Lenkeinschlagswinkel gesendet werden, kann es sich um die/eine Datenverarbeitungseinheit oder die/eine Anzeigeeinheit der Fahrwerksvermessungseinrichtung handeln, aber auch um ein mobiles Datenverarbeitungs- und Anzeigegerät, wie ein Mobiltelefon oder ein Tabletcomputer. Dort können diese Daten verarbeitet, insbesondere in eine Fahrwerksvermessung mit einbezogen und/oder abgespeichert werden.

Eine solche Einheit einer Fahrwerksvermessungseinrichtung kann auch eine sogenannte Cloud sein, also ein Netzwerk von Servern, auf denen diese Daten verarbeitet, insbesondere in eine Fahrwerksvermessung mit einbezogen und/oder abgespeichert werden.

Durch die lokale Anzeigeeinheit kann die gemessene Radaufstandskraft direkt an dem Drehuntersatz angezeigt werden, was die Benutzerfreundlichkeit erhöht, weil die Radaufstandskraft nicht nur an der Fahrwerksvermessungseinrichtung, sondern an dem Drehuntersatz selbst angezeigt und kontrolliert werden kann.

Durch den lokalen Akku werden die Wiegeeinrichtung, die lokale Sendeeinheit und die lokale Anzeigeeinheit mit Energie versorgt. Dieser lokale Akku wird üblicherweise von Zeit zu Zeit wieder aufgeladen. Hierfür kann der lokale Akku mit einem entsprechenden Anschluss zur Energieversorgung ausgestattet sein.

Ein erfindungsgemäßer Drehuntersatz kann auch als elektronische Radiastwaage bezeichnet werden.

Mit dem erfindungsgemäßen Raduntersatz kann die Gewichtsverteilung am Fahrzeug hochpräzise bestimmt werden.

In Verbindung mit einer Achsvermessung kann das Fahrwerk des Kraftfahrzeugs optimal abgestimmt werden. Dadurch werden nicht nur die Kurvenstabilität des Kraftfahrzeugs, sondern das gesamte Handling des Kraftfahrzeugs positiv beeinflusst.

Ein erfindungsgemäßer Drehuntersatz kann bei beliebigen Kraftfahrzeug-Messplätzen oder Kraftfahrzeug-Hebebühnen zum Einsatz kommen und ist somit kompatibel mit allen gängigen Kraftfahrzeug-Messplätzen und Kraftfahrzeug-Hebebühnen.

Ein erfindungsgemäßer Drehuntersatz ist besonders robust ausgeführt und hat eine lange Lebensdauer.

Zudem ist ein erfindungsgemäßer Drehuntersatz günstiger in der Herstellung als herkömmliche kabelgebundene Drehuntersätze, weil z.B. die Bühnenverkabelung eingespart werden kann. Zudem wird vermieden, dass Kabel z.B. durch Überfahrt von Fahrzeugen beschädigt werden und ausgetauscht werden müssen.

Mit anderen Worten ist der erfindungsgemäße Drehuntersatz mit einer lokalen Intelligenz ausgestattet, die Radaufstandskraft des Fahrzeugrads und insbesondere auch der Drehwinkel/Lenkeinschlagswinkel des Fahrzeugrads werden lokal ermittelt und angezeigt und per Funk an eine Einheit einer Fahrwerksvermessungseinrichtung versendet. Ein lokaler Akku versorgt die Wiegeeinrichtung, insbesondere den Drehwinkelsensor, die lokale Sendeeinheit und die Anzeige mit Strom / Energie.

Die erfassten Gewichtswerte können im Achsmessprogramm verarbeitet werden. Dadurch können die vorgegebenen Sollwerte für das Fahrzeug angepasst werden.

Erfindungsgemäß ist die Wiegeeinrichtung in Form von zwei an gegenüberliegenden Seiten der Basis, insbesondere an der Front- und Rückseite innerhalb der Basis angeordneten Balkensensoren ausgebildet, die sich über einen Großteil der Innenseite der Basis erstrecken. Die Balkensensoren verfügen insbesondere jeweils über zwei Aufstandspunkte.

Solche Balkensensoren sind besonders kompakt und robust ausgebildet und erlauben die zuverlässige Bestimmung der durch das Fahrzeugrad auf die Drehplatte ausgeübten Radaufstandskraft.

Gemäß einer ersten Ausführungsform verfügt der Drehuntersatz weiterhin über einen Drehwinkelsensor, der dazu ausgebildet ist, den Drehwinkel der Drehplatte gegenüber der Basis bzw. den Lenkeinschlagwinkel des auf der Drehplatte abgestützten Fahrzeugrads zu ermitteln. Der Drehwinkelsensor kann als mittig angeordneter Encoder ausgebildet sein.

Die lokale Sendeeinheit ist dabei insbesondere weiterhin dazu ausgebildet, den Drehwinkel an eine Einheit einer Fahrwerksvermessungseinrichtung zu versenden.

Die lokale Anzeigeeinheit ist dabei weiterhin dazu ausgebildet ist, den Drehwinkel anzuzeigen.

Der lokale Akku ist dabei weiterhin dazu ausgebildet, den Drehwinkelsensor mit Energie zu versorgen.

Dadurch, dass der Drehuntersatz bei dieser Ausführungsform mit einem solchen Drehwinkelsensor ausgestattet ist, kann die Funktionalität des Drehuntersatzes erhöht werden. Neben der Radaufstandskraft des Fahrzeugrads kann nun durch den Drehuntersatz auch der Drehwinkel der Drehplatte gegenüber der Basis und somit gegenüber dem Kraftfahrzeug-Messplatz / gegenüber der Kraftfahrzeug-Hebebühne bzw. der Lenkeinschlagwinkel des auf der Drehplatte abgestützten Fahrzeugrads ermittelt und in die Fahrwerksvermessung mit einbezogen werden.

Durch solchermaßen ausgebildete Wiegeeinrichtungen und, falls vorgesehen, durch einen solchen Drehwinkelsensor kann eine Messgenauigkeit der Radaufstandskraft bzw. des Drehwinkels-/Lenkeinschlagswinkels mit Abweichungen von weniger als 0,5%, insbesondere von weniger als 0,2% erreicht werden.

Der lokale Akku kann dabei so ausgebildet sein, dass er im Vollbetrieb eine Akkulaufzeit von bis zu 24 Stunden gewährleistet. Des Weiteren kann der lokale Akku so ausgebildet sein, dass er eine Energieversorgung der Wiegeeinrichtung und/oder der lokalen Sendeeinheit und/oder der Anzeige und/oder des Drehwinkelsensors von z. B. 5 V bereitstellt.

Gemäß einer weiteren Ausführungsform ist der Drehuntersatz zwischen verschiedenen Positionen des Kraftfahrzeug-Messplatzes oder der Kraftfahrzeug-Hebebühne austauschbar, ohne Entkabeln und Verkabeln.

Gemäß einer weiteren Ausführungsform ist der Drehuntersatz ohne Entkabeln wegräumbar und ohne Verkabeln an einer Position des Kraftfahrzeug-Messplatzes oder der Kraftfahrzeug-Hebebühne installierbar.

Dadurch ergeben sich eine besondere Flexibilität und schnelle Rüstzeiten.

Gemäß einer weiteren Ausführungsform sind die lokale Anzeigeeinheit, der lokale Akku und die lokale Sendeeinheit in einem gemeinsamen Gehäuse untergebracht.

Die lokale Anzeigeeinheit oder das Gehäuse können dabei an der Außenseite des Basis, bezogen auf den Kraftfahrzeug-Messplatz oder die Kraftfahrzeug-Hebebühne, angeordnet sein.

Insbesondere können die lokale Anzeigeeinheit oder das Gehäuse zwischen zwei Griffen an der Außenseite des Basis, bezogen auf den Kraftfahrzeug-Messplatz oder die Kraftfahrzeug-Hebebühne, angeordnet sein.

Eine lokale Anzeigeeinheit, bei welcher der lokale Akku und die lokale Sendeeinheit und insbesondere auch die lokale Energieversorgungseinheit in einem gemeinsamen Gehäuse untergebracht sind, ist besonders robust und unempfindlich gegen Beschädigungen sowie besonders platzsparend ausgebildet.

Durch die Anordnung der lokalen Anzeigeeinheit oder des Gehäuses an der Außenseite der Basis können die auf der Anzeige dargestellten Daten, z. B. die gemessen Radaufstandskraft und der Drehwinkel/Lenkeinschlagswinkel gut abgelesen werden. Dabei ist die Anzeige insbesondere an der Oberseite des Gehäuses angeordnet.

Wenn die lokale Anzeigeeinheit / das Gehäuse zwischen zwei Griffen an der Außenseite der Basis angeordnet ist, ist diese durch die Griffe geschützt, z. B. vor versehentlichen Schlägen oder einwirkenden Kräften. Diese Schutzwirkung ist besonders gut ausgebildet, wenn sich die Griffe wenigstens bis zu einer Ebene erstrecken, die weiter außen liegt als das äußere Ende des Gehäuses, bezogen auf den Kraftfahrzeug-Messplatz oder die Kraftfahrzeug-Hebebühne.

Gemäß einer weiteren Ausführungsform ist die lokale Anzeigeeinheit als LCD- oder OLED-Display ausgebildet.

Ein solchermaßen ausgebildetes Display stellt einen besonders guten Kompromiss zwischen Ablesbarkeit der Werte einerseits und Stromverbrauch andererseits dar.

Gemäß einer weiteren Ausführungsform ist die lokale Anzeigeeinheit als einfarbiges Display und/oder als Multianzeigen-Display ausgebildet.

Gemäß einer weiteren Ausführungsform ist die lokale Sendeeinheit dazu ausgebildet, die gemessene Radaufstandskraft und/oder den Drehwinkel/Lenkeinschlagwinkel auf wenigstens einer Arbeitsfrequenz an eine Einheit einer Fahrwerksvermessungseinrichtung zu versenden. Bei der Arbeitsfrequenz kann es sich insbesondere um eine Arbeitsfrequenz von 433 MHz, 915 MHz, 920 MHz oder 2,4 GHz handeln.

Durch Versenden der gemessenen Radaufstandskraft und/oder des Drehwinkels/Lenkeinschlagswinkels auf wenigstens einer Arbeitsfrequenz kann einerseits eine kabelgebundene Übertragung und der daraus resultierende Hardware-Aufwand eingespart werden. Andererseits kann eine besonders gut geeignete Arbeitsfrequenz hierfür gewählt werden.

Gemäß einer weiteren Ausführungsform ist die lokale Sendeeinheit dazu ausgebildet, dass verschiedene Arbeitsfrequenzen auswählbar sind, auf denen die gemessene Radaufstandskraft und/oder der Drehwinkel/ Lenkeinschlagwinkel an eine Einheit einer Fahrwerksvermessungseinrichtung versendet wird. Bei den auswählbaren Arbeitsfrequenzen kann es sich insbesondere um zwei oder mehrere der Arbeitsfrequenzen 433 MHz, 915 MHz, 920 MHz und 2,4 GHz handeln.

Durch diese Ausführungsform kann eine kabelgebundene Übertragung und der daraus resultierende Hardware-Aufwand eingespart werden. Zudem können die gemessene Radaufstandskraft und/oder der ermittelte Drehwinkel/Lenkeinschlagswinkel auf verschiedenen, individuell auswählbaren und gut geeigneten Arbeitsfrequenzen versendet, insbesondere an eine Einheit einer Fahrwerksvermessungseinrichtung gesendet werden.

Die Arbeitsfrequenzen können dabei je nach Fahrwerksvermessungseinrichtung und je nach individueller Einsatzsituation ausgewählt werden.

Hierdurch ist der erfindungsgemäße Drehuntersatz besonders gut und individuell an unterschiedliche Fahrwerksvermessungseinrichtungen und unterschiedliche Situationen anpassbar.

Die Erfindung betrifft auch eine Fahrwerksvermessungseinrichtung, wie in Anspruch 9 angegeben.

Für die erfindungsgemäße Fahrwerksvermessungseinrichtung treffen alle vor- und nachstehend mit Bezug auf den erfindungsgemäßen Drehuntersatz angegebenen Vorteile und Ausführungsformen zu. Diese werden zur Vermeidung von Wiederholungen hier nicht noch einmal angegeben.

Mittels einer solchen Fahrwerksvermessungseinrichtung kann eine hochpräzise Fahrwerksvermessung durchgeführt werden. Die Radaufstandskräfte stehen nicht nur z. B. in einer/der Datenverarbeitungseinheit oder einer/der Anzeigeeinheit der Fahrwerksvermessungseinrichtung zur Verfügung, sondern können auch direkt an dem wenigstens einen Drehuntersatz abgelesen und kontrolliert werden.

Eine solche Fahrwerksvermessungseinrichtung kann besonders schnell installiert und in Betrieb genommen werden. Der Austausch von Drehuntersätzen ist einfach und ohne umständliches Ver- und Entkabeln möglich.

Dadurch, dass die Fahrwerksvermessungseinrichtung aus den von den Drehuntersätzen empfangenen Radaufstandskraft-Werten wenigstens einen der Werte ermittelt und in die Achsvermessung mit einbezieht, der aus der Gruppe ausgewählt ist:
Gewicht pro Rad, Gewichtsverteilung pro Achse, Differenz zwischen vorne und hinten, Gewichtsverteilung pro Seite, Differenz zwischen links und rechts, Überkreuzgewicht, Überkreuzgewicht in Prozent, Wedge, Wedge in in Prozent, Gesamtgewicht, und aktueller Schwerpunkt vom Gesamtfahrzeug
wird die Gewichtsverteilung am Kraftfahrzeug hochpräzise bestimmt und in die Fahrwerksvermessung mit einbezogen.

Dadurch kann das Fahrwerk eines auf dem Kraftfahrzeug-Messplatz / der Kraftfahrzeug-Hebebühne der Fahrwerksvermessungseinrichtung stehenden Kraftfahrzeugs optimal abgestimmt werden. Nicht nur die Kurvenstabilität, sondern das gesamte Handling des Kraftfahrzeugs wird somit positiv beeinflusst.

Mit Hilfe des wenigstens einen erfindungsgemäßen Drehuntersatzes, der bei der erfindungsgemäßen Fahrwerksvermessungseinrichtung zum Einsatz kommt, können die statische Gewichtsverteilung und die Bestimmung des Schwerpunkts in die Achsvermessung integriert werden.

Dadurch steht das Kraftfahrzeug immer auf einem stabilen und nivellierten Untergrund, was besonders präzise Messergebnisse für die Fahrwerksvermessung ermöglicht.

Zudem können durch Lastumverteilung veränderte fahrwerksspezifische Daten, wie geometrische Fahrachse, Sturz, Spur und Radversatz direkt durch die Fahrwerksvermessungseinrichtung korrigiert werden.

Bei Einsatz einer erfindungsgemäßen Fahrwerksvermessungseinrichtung für die Fahrwerksvermessung von Sportwägen, die im Motorsport eingesetzt werden, können eine optimale Abstimmung des Kraftfahrzeugs erreicht und bessere Rundenzeiten ermöglicht werden.

Die Software, die auf der Fahrwerksvermessungseinrichtung läuft, kann dabei alle Messwerte übersichtlich darstellen und z. B. mittels Miniscreens Livewerte der vier Kraftfahrzeugräder anzeigen.

Zudem kann eine solche Software ein Wiegeprotokoll mit Firmen- und Kundeninformationen erstellen.

Ein erfindungsgemäßer Drehuntersatz ermöglicht eine digitale Liveanzeige der gemessenen Radaufstandskräfte und/oder des gemessenen Drehwinkel/Lenkeinschlagswinkels direkt am Drehuntersatz selbst.

Gemäß einer ersten Ausführungsform ist die Fahrwerksvermessungseinrichtung weiterhin so ausgebildet, dass sie aus den von den Drehuntersätzen empfangenen Radaufstandskraft-Werten die statische Gewichtsverteilung des vermessenen Kraftfahrzeugs ermittelt und/oder den Schwerpunkt des vermessenen Kraftfahrzeugs bestimmt und direkt in die Achsvermessung miteinbezieht, zur genaueren Bestimmung der fahrwerksspezifischen Daten.

Gemäß einer weiteren Ausführungsform ist an wenigstens einer Fahrzeugrad-Position, insbesondere an wenigstens den zwei vorderen Fahrzeugrad-Positionen jeweils ein Drehuntersatz mit einem Drehwinkelsensor der vorstehend beschriebenen Art angeordnet. Die Fahrwerksvermessungseinrichtung ist dabei weiterhin so ausgebildet, dass der von dem wenigstens einen Drehuntersatz empfangene Drehwinkel- bzw. Lenkeinschlagwinkel-Wert in die Achsvermessung miteinbezogen wird.

Wenn an wenigstens einer Fahrzeugrad-Position, insbesondere an wenigstens zwei vorderen Fahrzeugrad-Positionen jeweils ein erfindungsgemäßer Drehuntersatz mit einem Drehwinkelsensor angeordnet ist und die Fahrwerksvermessungseinrichtung weiterhin so ausgebildet ist, dass der von dem wenigstens einen Drehuntersatz empfangene Drehwinkel- bzw. Lenkeinschlagswinkel-Wert in die Achsvermessung mit einbezogen wird, kann die Funktionalität und Genauigkeit der Fahrwerksvermessungseinrichtung weiter erhöht werden.

Die Erfindung ist nachfolgend anhand von Ausführungsbeispielen mit Bezug auf die beiliegenden Figuren näher erläutert.
Figur 1 zeigt eine schematische perspektivische Ansicht eines Drehuntersatzes gemäß einem Ausführungsbeispiel der vorliegenden Erfindung, schräg von oben;
Figur 2 zeigt eine schematische Untersicht des Drehuntersatzes aus Figur 1; und
Figur 3 zeigt eine schematische Untersicht des Drehuntersatzes aus Figur 1, wobei dieser zusätzlich noch über einen Drehwinkelsensor verfügt.

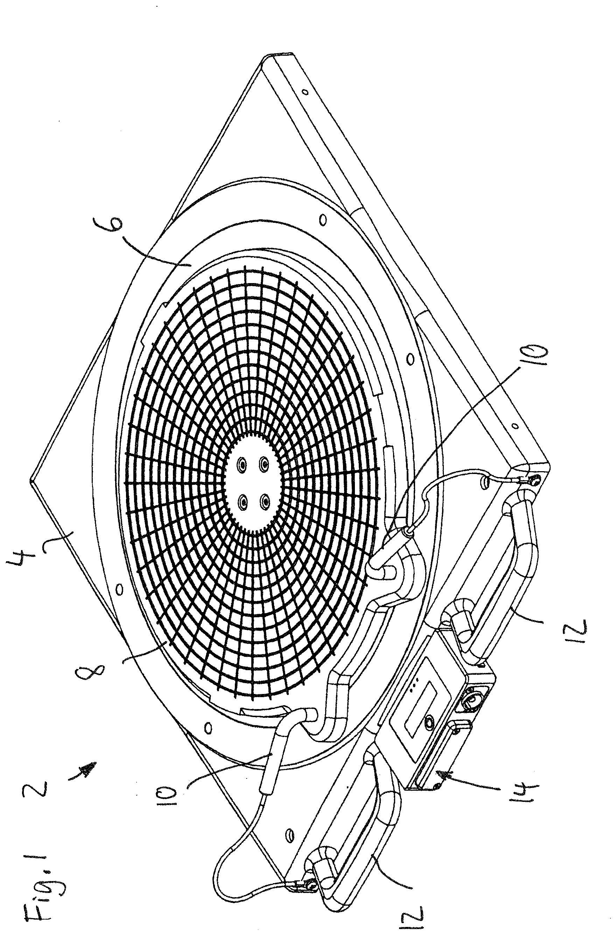

Der in Figur 1 gezeigte Drehuntersatz 2 verfügt über eine Grundplatte 4 mit im Wesentlichen rechteckiger Grundform und über eine auf der Grundplatte 4 aufliegenden Drehplatte 8 zum Abstützen eines Fahrzeugrads. Die Grundplatte 4 stellt dabei die Basis des Drehuntersatzes 2 dar, mit welcher der Drehuntersatz 2 z. B. auf den Fahrschienen eines Kraftfahrzeug-Messplatzes oder einer Kraftfahrzeug-Hebebühne steht. Die Drehplatte 8 kann auch als Drehteller 8 bezeichnet werden.

Man kann sich einen Kraftfahrzeug-Messplatz oder eine Kraftfahrzeug-Hebebühne mit Drehuntersätzen 2, insbesondere an den zwei vorderen Fahrzeugradpositionen gut vorstellen, indem an entsprechenden Aussparungen der Fahrschienen an den zwei vorderen Fahrzeugradpositionen jeweils ein Drehuntersatz 2, wie in den Figuren 1 bis 3 gezeigt, positioniert wird. Selbstverständlich kann auch an Positionen der Fahrschienen, die den zwei hinteren Fahrzeugradpositionen entsprechen, jeweils ein Drehuntersatz 2, wie in den Figuren 1 bis 3 gezeigt, positioniert werden.

Bei dem Drehuntersatz 2, wie in Figur 1 gezeigt, kann man einen kreisförmigen bzw. kreisringförmigen Rondeneinsatz 6 unterhalb der Drehplatte 8 und auf/in der Grundplatte 4 erkennen. Dieser Rondeneinsatz 6 ist grundplattenseitig von einem Ring umgeben, der in Fig. 1 gut zu erkennen ist.

Um eine Drehbewegung der Drehplatte 8 gegenüber der Grundplatte 4 zu ermöglichen, können oberhalb des Rondeneinsatzes 6 und unterhalb der Drehplatte 8, von unten nach oben gesehen, ein kreisringförmiger Kugelkäfig mit entsprechenden Aussparungen, in die von oben Stahlkugeln eingebracht sind, und ein weiterer Rondeneinsatz, der mit seiner Unterseite auf den Stahlkugeln aufliegt, angeordnet sein (nicht gezeigt). Die Stahlkugeln sind dabei robust und der Kugelkäfig leichtgängig ausgebildet. Die Rondeneinsätze sorgen für eine präzise Oberfläche. Des Weiteren kann noch eine Zentrierscheibe innerhalb des Kugelkäfigs vorgesehen sein (ebenfalls nicht gezeigt).

Somit kann die Drehplatte 8, zusammen mit dem weiteren Rondeneinsatz gegenüber den Stahlkugeln, dem Kugelkäfig und dem Rondeneinsatz 6 und somit gegenüber der Grundplatte 4 präzise gedreht werden. Gleichzeitig können durch den Drehuntersatz 2 hohe Aufstandskräfte von Kraftfahrzeugrädern aufgenommen und gemessen werden.

Des Weiteren hat die Drehplatte 8 zwei in Figur 1 nach außen, bezogen auf den Kraftfahrzeug-Messplatz oder die Kraftfahrzeug-Hebebühne, gerichtete Vorsprünge und Sicherungsstifte 10, mit denen sie verrutschsicher gegenüber dem Drehuntersatz 2 gesichert ist. Die Sicherungsstifte 10 sind dabei mittels eines Drahts gehaltert, der an der Außenseite der Grundplatte 4 jeweils außen neben den seitlichen Griffen 12 befestigt ist.

An der Außenseite der Grundplatte 4, bezogen wiederum auf den Kraftfahrzeug-Messplatz oder die Kraftfahrzeug-Hebebühne, sind zwei seitliche Griffe 12 beabstandet voneinander angeordnet, um den Drehuntersatz 2 als Ganzes transportieren, z. B. auf den Kraftfahrzeug-Messplatz oder die Kraftfahrzeug-Hebebühne aufbringen und von diesem/dieser entfernen zu können.

An der Außenseite der Grundplatte 4 ist in einem mittleren Zwischenraum zwischen den beiden seitlichen Griffen 12 ein Gehäuse mit einer lokalen Anzeigeeinheit 14 mit Akku und Sendeeinheit angeordnet.

In Figur 1 ist gut zu erkennen, dass die Anzeige von oben ablesbar ist. Nach außen als Vorsprung ausgebildet ist die Sendeeinheit an dem Gehäuse der lokalen Anzeigeeinheit 14 angeordnet.

Des Weiteren ist an der Außenseite der lokalen Anzeigeeinheit 14 eine Steckdose angeordnet, zum kabelgebundenen Aufladen des lokalen Akkus der lokalen Anzeigeeinheit 14.

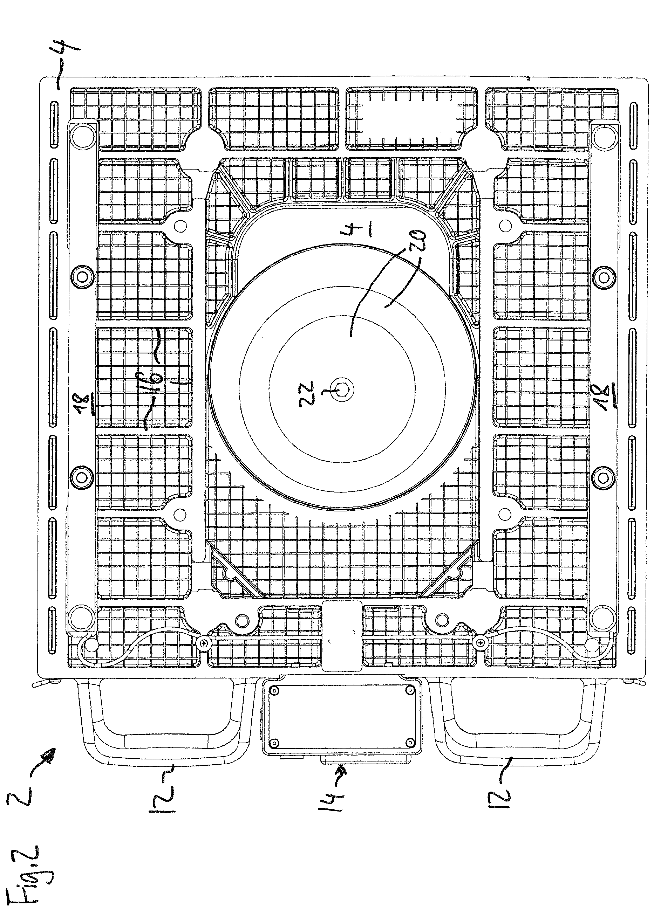

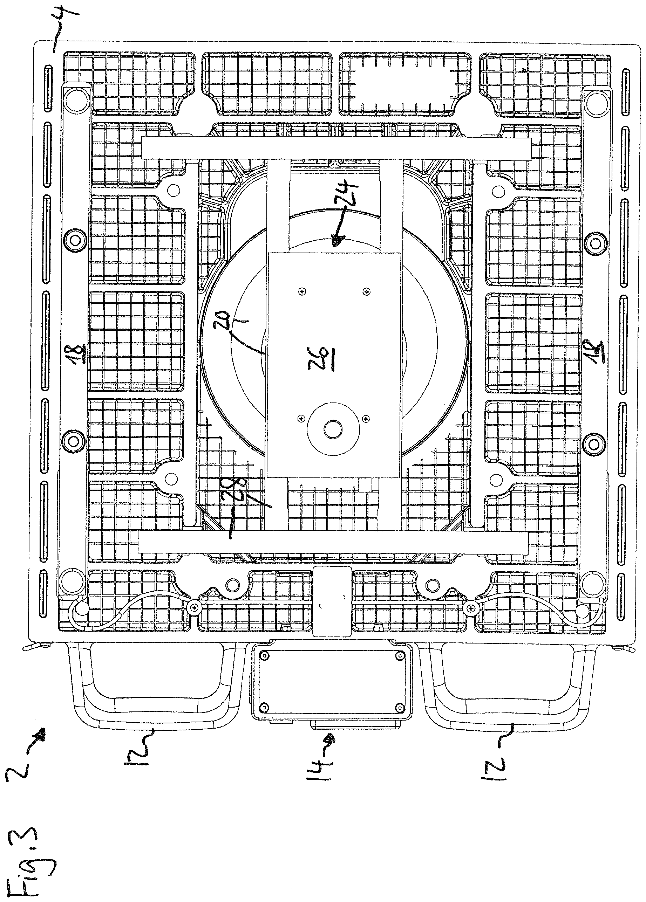

Die lokale Anzeigeeinheit 14 kann dabei insbesondere an die Außenseite der Grundplatte 4 angeschraubt sein und mittels eines Kabels mit den mit Bezug auf die Figuren 2 und 3 näher erläuterten Wiegeeinrichtungen 18 und mit dem mit Bezug auf die Figur 3 näher erläuterten Drehwinkelgeber 24 verbunden sein. Hierfür kann eine Öffnung in der Außenseite der Grundplatte 4 vorhanden sein, durch die ein solches Kabel verläuft.

Die Oberseite der Drehplatte 8 kann mit einem geeigneten Profil aus Rillen oder Rippen versehen sein, um eine erhöhte Reibung für das aufstehende Kraftfahrzeugrad bereitzustellen, um ein Wegrutschen desselben zu verhindern. Im vorliegenden Ausführungsbeispiel ist das Profil als Rillenprofil mit konzentrischen, ringförmigen Rillen und mit radial nach außen verlaufenden Rillen ausgeführt.

In der Untersicht des Drehuntersatzes in Figur 2 ist zu sehen, dass die untere Aufstandsfläche der Grundplatte 4 durch die unteren Enden einer Rippenstruktur 16 ausgebildet ist. Diese Rippenstruktur 16 sorgt für eine ausreichende Stabilität der Grundplatte 4 bei gleichzeitig reduziertem Gewicht und gleichzeitig reduziertem Materialeinsatz.

Die erfindungsgemäße Wiegeeinrichtung ist in Form von zwei Balkensensoren / Wiegebalken 18 ausgebildet, die an der Front- und Rückseite innerhalb der Grundplatte 4 angeordnet sind, insbesondere jeweils benachbart an die vordere und hintere Außenwand der Grundplatte 4. Die beiden Wiegebalken / Balkensensoren 18 erstrecken sich dabei über einen Großteil der Innenseite zwischen Außenwand und Innenwand der Grundplatte 4, insbesondere über etwa 80 bis 95% dieser freien Innenseite. Die Wiegebalken / Balkensensoren 18 verfügen jeweils über z.B. zwei in Figur 2 jeweils außen und innen dargestellte Aufstandspunkte. Sie sind jeweils mittels eines Kabels mit der lokalen Anzeigeeinheit 14 verbunden.

Des Weiteren ist in Figur 2 eine mittige Aussparung in der Grundplatte 4 zu erkennen, innerhalb derer Abdeckscheiben 20 und die mittige Schraube, z. B. Linsensenkschraube 22 erkennbar ist. Rechts von den Abdeckscheiben 20 ist durch die mittige Aussparung ein oberer Bereich der Grundplatte 4 zu erkennen. Die Schraube 22 und die Abdeckscheiben 20 sind dabei insbesondere drehfest mit der Drehplatte 8 verbunden.

Der Drehuntersatz 2 gemäß der Untersicht von Figur 2 ist ohne Drehwinkelsensor ausgebildet. Die Radaufstandskraft des auf der Drehplatte 8 stehenden Kraftfahrzeugrads wird durch die Wiegebalken / Balkensensoren 18 ermittelt und an die lokale Anzeigeeinheit 14 übermittelt. Diese zeigt die Radaufstandskraft auf der Anzeige an und versendet diese durch ihre lokale Sendeeinheit an eine Einheit einer Fahrwerksvermessungseinrichtung (nicht gezeigt).

Der Drehuntersatz 2 gemäß der Untersicht von Figur 2 ist somit dazu ausgebildet, die Radaufstandskraft des auf der Drehplatte 8 stehenden Kraftfahrzeugrads zu ermitteln, an der Anzeige der lokalen Anzeigeeinheit 14 anzuzeigen und diese über die Sendeeinheit der lokalen Anzeigeeinheit 14 an eine Einheit der Fahrwerksvermessungseinrichtung zu versenden, welche die Radaufstandskraft in die Fahrwerksvermessung mit einbezieht.

Der lokale Akku der lokalen Anzeigeeinheit 14 versorgt die Anzeige, die Wiegebalken 18 und die Sendeeinheit mit Energie.

Die Untersicht des Drehuntersatzes 2 von Figur 3 entspricht der Untersicht von Figur 2, wobei der Drehuntersatz 2 von Figur 3 zusätzlich noch über einen Winkelgeber 24 mit unterer Abdeckung 26 und über eine H-Führung 28 verfügt.

Die H-Führung 28 ist dabei in Form von zwei sich in Fahrzeuglängsrichtung erstreckenden Balken und sich zwischen diesen zwei Balken erstreckenden parallelen Schienen ausgebildet.

Die äußeren Balken sind dabei fest mit der Rippenstruktur 16 der Grundplatte 4 verbunden, und sie sind jeweils nach außen von der mittigen Aussparung der Grundplatte 4 beabstandet und parallel zueinander angeordnet. An den zwei parallelen Schienen, die fest mit den beiden Balken und/oder mit der Rippenstruktur 16 der Grundplatte 4 verbunden sind, ist eine im Wesentlichen rechteckige Abdeckung 26 angebracht, die den oberhalb davon positionierten Winkelgeber 24 von unten her abdeckt.

Der Drehwinkelgeber 24 kann dabei als mittig angeordneter Encoder ausgebildet sein, und den Drehwinkel der Drehplatte 8 bzw. den Lenkeinschlagwinkel des auf der Drehplatte 8 abgestützten Fahrzeugrads ermitteln. Der Winkelgeber 24 ist dabei insbesondere mittels einer Schraube, z. B. einer Linsensenkschraube, drehfest mit der Drehplatte 8 verbunden.

Der lokale Akku der lokalen Anzeigeeinheit 14 versorgt die Anzeige, die Wiegebalken 18, den Drehwinkelgeber 24 und die Sendeeinheit mit Energie.

Der so ermittelte Drehwinkel/Lenkeinschlagwinkel wird von dem Winkelgeber 24 kabelgebunden oder kabellos an die lokale Anzeigeeinheit 14 übermittelt.

Der Drehuntersatz 2 gemäß der Untersicht von Figur 3 ist somit dazu ausgebildet, sowohl die Radaufstandskraft des auf der Drehplatte 8 stehenden Kraftfahrzeugrads als auch den Drehwinkel der Drehplatte 8 bzw. den Lenkeinschlagwinkel des auf der Drehplatte 8 stehenden Kraftfahrzeugrads zu ermitteln, an der Anzeige der lokalen Anzeigeeinheit 14 anzuzeigen und diese Werte über die Sendeeinheit der lokalen Anzeigeeinheit 14 an eine Einheit der Fahrwerksvermessungseinrichtung zu versenden, welche diese Werte in die Fahrwerksvermessung mit einbezieht.

Für die weiteren Vorteile und Ausführungsformen des Drehuntersatzes sowie der Fahrwerksvermessungseinrichtung mit Kraftfahrzeug-Messplatz oder Kraftfahrzeug-Hebebühne mit wenigstens einem Messkopf pro Seite des Kraftfahrzeug-Messplatzes oder der Kraftfahrzeug-Hebebühne und mit an wenigstens einer Fahrzeugradposition angeordnetem Drehuntersatz gemäß den hier beschriebenen Ausführungsbeispielen wird auf den allgemeinen Beschreibungsteil verwiesen, um Wiederholungen zu vermeiden.

### Bezugszeichenliste

- 2: Drehuntersatz
- 4: Grundplatte
- 6: Rondeneinsatz
- 8: Drehplatte
- 10: Sicherungsstifte
- 12: seitliche Griffe
- 14: lokale Anzeigeeinheit mit Akku und Sendeeinheit
- 16: Rippenstruktur
- 18: Wiegebalken
- 20: Abdeckscheiben
- 22: Schraube
- 24: Winkelgeber
- 26: Abdeckung
- 28: H-Führung

## Patentansprüche

1. Drehuntersatz (2) zur Fahrwerksvermessung für einen Kraftfahrzeug-Messplatz oder für eine Kraftfahrzeug-Hebebühne, aufweisend
eine Basis (4);
eine gegenüber der Basis (4) drehbare Drehplatte (8) zum Abstützen eines Fahrzeugrads; und
wobei der Drehuntersatz (2) mobil und unverkabelt ausgebildet ist, mit einer lokalen Anzeigeeinheit (14) und mit einem lokalen Akku zur Energieversorgung der Anzeige;
**dadurch gekennzeichnet, dass**
der Drehuntersatz (2) eine Wiegeeinrichtung (18) zur Messung der Radaufstandskraft des Fahrzeugrads aufweist;
der Drehuntersatz (2) eine lokale Sendeeinheit zum Versenden der gemessenen Radaufstandskraft per Funk an eine Einheit einer Fahrwerksvermessungseinrichtung aufweist;
die lokale Anzeigeeinheit (14) auch zur Anzeige der gemessenen Radaufstandskraft ausgebildet ist;
der lokale Akku auch zur Energieversorgung der Wiegeeinrichtung und der lokalen Sendeeinheit ausgebildet ist;
die Wiegeeinrichtung in Form von zwei an gegenüberliegenden Seiten der Basis, insbesondere an der Front- und Rückseite innerhalb der Basis (4) angeordneten Balkensensoren (18) ausgebildet ist, die sich über einen Großteil der Innenseite der Basis (4) erstrecken; und
die Balkensensoren (18) insbesondere jeweils über zwei Aufstandspunkte verfügen.

2. Drehuntersatz (2) nach Anspruch 1,
wobei der Drehuntersatz (2) weiterhin über einen Drehwinkelsensor (24) verfügt, der dazu ausgebildet ist, den Drehwinkel der Drehplatte (8) gegenüber der Basis bzw. den Lenkeinschlagwinkel des auf der Drehplatte (8) abgestützten Fahrzeugrads zu ermitteln; und/oder
wobei der Drehwinkelsensor (24) als mittig angeordneter Encoder ausgebildet ist; und/oder
wobei die lokale Sendeeinheit (14) weiterhin dazu ausgebildet ist, den Drehwinkel an eine Einheit einer Fahrwerksvermessungseinrichtung zu versenden; und/oder
wobei die lokale Anzeigeeinheit (14) weiterhin dazu ausgebildet ist, den Drehwinkel anzuzeigen; und/oder
wobei der lokale Akku (14) weiterhin dazu ausgebildet ist, den Drehwinkelsensor (24) mit Energie zu versorgen.

3. Drehuntersatz (2) nach einem der vorhergehenden Ansprüche,
wobei der Drehuntersatz (2) zwischen verschiedenen Positionen des Kraftfahrzeug-Messplatzes oder der Kraftfahrzeug-Hebebühne austauschbar ist, ohne Entkabeln und Verkabeln; und/oder
wobei der Drehuntersatz (2) ohne Entkabeln wegräumbar und ohne Verkabeln an einer Position des Kraftfahrzeug-Messplatzes oder der Kraftfahrzeug-Hebebühne installierbar ist.

4. Drehuntersatz (2) nach einem der vorhergehenden Ansprüche,
wobei die lokale Anzeigeeinheit, der lokale Akku und die lokale Sendeeinheit in einem gemeinsamen Gehäuse (14) untergebracht sind; und/oder
wobei die lokale Anzeigeeinheit oder das Gehäuse (14) an der Außenseite des Basis (4), bezogen auf den Kraftfahrzeug-Messplatz oder die Kraftfahrzeug-Hebebühne, angeordnet ist; und/oder
wobei die lokale Anzeigeeinheit oder das Gehäuse (14) zwischen zwei Griffen (12) an der Außenseite des Basis (4), bezogen auf den Kraftfahrzeug-Messplatz oder die Kraftfahrzeug-Hebebühne, angeordnet ist.

5. Drehuntersatz (2) nach einem der vorhergehenden Ansprüche,
wobei die lokale Anzeigeeinheit (14) als LCD- oder OLED-Display ausgebildet ist; und/oder
wobei die lokale Anzeigeeinheit (14) als einfarbiges Display und/oder als Multianzeigen-Display ausgebildet ist.

6. Drehuntersatz (2) nach einem der vorhergehenden Ansprüche,
wobei die lokale Sendeeinheit (14) dazu ausgebildet ist, die gemessene Radaufstandskraft und/oder den Drehwinkel/Lenkeinschlagwinkel auf wenigstens einer Arbeitsfrequenz an eine Einheit einer Fahrwerksvermessungseinrichtung zu versenden;
wobei es sich bei der Arbeitsfrequenz insbesondere um eine Arbeitsfrequenz von 433 MHz, 915 MHz, 920 MHz oder 2,4 GHz handelt.

7. Drehuntersatz (2) nach einem der vorhergehenden Ansprüche,
wobei die lokale Sendeeinheit (14) dazu ausgebildet ist, dass verschiedene Arbeitsfrequenzen auswählbar sind, auf denen die gemessene Radaufstandskraft und/oder der Drehwinkel/ Lenkeinschlagwinkel an eine Einheit einer Fahrwerksvermessungseinrichtung versendet wird; und
wobei es sich bei den auswählbaren Arbeitsfrequenzen insbesondere um zwei oder mehrere der Arbeitsfrequenzen 433 MHz, 915 MHz, 920 MHz und 2,4 GHz handelt.

8. Fahrwerksvermessungseinrichtung, aufweisend
einen Kraftfahrzeug-Messplatz oder eine Kraftfahrzeug-Hebebühne,
wenigstens einen Messkopf pro Seite des Kraftfahrzeug-Messplatzes oder der Kraftfahrzeug-Hebebühne, der so angeordnet und ausgebildet ist, dass er Bildaufnahmen der Räder des Kraftfahrzeugs oder von an den Rädern des Kraftfahrzeugs angeordneten Targets erstellt;
wobei an wenigstens einer Fahrzeugrad-Position, insbesondere an wenigstens den zwei vorderen Fahrzeugrad-Positionen jeweils ein Drehuntersatz (2) nach einem der vorhergehenden Ansprüche angeordnet ist;
wobei die Fahrwerksvermessungseinrichtung so ausgebildet ist,
dass sie aus diesen Bildaufnahmen fahrwerksspezifische Daten, wie geometrische Fahrachse, Sturz, Spur und Radversatz bestimmt; und
dass sie aus den von den Drehuntersätzen (2) empfangenen Radaufstandskraft-Werten wenigstens einen der Werte ermittelt und in die Achsvermessung miteinbezieht, der aus der Gruppe ausgewählt ist: Gewicht pro Rad, Gewichtsverteilung pro Achse, Differenz zwischen vorne und hinten, Gewichtsverteilung pro Seite, Differenz zwischen links und rechts, Überkreuzgewicht, Überkreuzgewicht in Prozent, Wedge, Wedge in in Prozent, Gesamtgewicht, und aktueller Schwerpunkt vom Gesamtfahrzeug.

9. Fahrwerksvermessungseinrichtung nach Anspruch 8,
wobei die Fahrwerksvermessungseinrichtung weiterhin so ausgebildet ist,
dass sie aus den von den Drehuntersätzen (2) empfangenen Radaufstandskraft-Werten die statische Gewichtsverteilung des vermessenen Kraftfahrzeugs ermittelt und/oder den Schwerpunkt des vermessenen Kraftfahrzeugs bestimmt und direkt in die Achsvermessung miteinbezieht, zur genaueren Bestimmung der fahrwerksspezifischen Daten.

10. Fahrwerksvermessungseinrichtung nach Anspruch 8 oder 9,
wobei an wenigstens einer Fahrzeugrad-Position, insbesondere an wenigstens den zwei vorderen Fahrzeugrad-Positionen jeweils ein Drehuntersatz (2) mit einem Drehwinkelsensor (24) nach einem der Ansprüche 3 bis 8 angeordnet ist;
wobei die Fahrwerksvermessungseinrichtung weiterhin so ausgebildet ist, dass der von dem wenigstens einen Drehuntersatz (2) empfangene Drehwinkel- bzw. Lenkeinschlagwinkel-Wert in die Achsvermessung miteinbezogen wird.

## Claims

1. A rotary base (2) for wheel alignment measurement for a motor vehicle measuring site or for a motor vehicle lifting platform, comprising a base member (4);
a rotary plate (8) for supporting a vehicle wheel, which is rotatable relative to the base member (4); and
wherein the rotary base (2) is mobile and wireless, with a local display unit (14) and with a local battery for supplying energy to the display;
**characterised in**
**that** the rotary base (2) comprises a weighing device (18) for measuring the vertical wheel force of the vehicle wheel;
**that** the rotary base (2) comprises a local transmitter unit for sending the measured vertical wheel force by radio to a unit of a wheel alignment measurement device;
**that** the local display unit (14) is also designed to display the measured vertical wheel force;
**that** the local battery is also designed for supplying energy to the weighing device and the local transmitter unit;
**that** the weighing device is designed in the form of two beam sensors (18) arranged on opposite sides of the base member, in particular on the front and back inside the base member (4), which extend over a large part of the inside of the base member (4); and
**that** the beam sensors (18) in particular have two contact points each.

2. The rotary base (2) according to claim 1,
wherein the rotary base (2) further comprises a rotation angle sensor (24) which is designed to determine the angle of rotation of the rotary plate (8) relative to the base member or the steering angle of the vehicle wheel supported on the rotary plate (8); and/or
wherein the rotation angle sensor (24) is designed as a centrally arranged encoder; and/or
wherein the local transmitter unit (14) is further designed to send the angle of rotation to a unit of a wheel alignment measurement device; and/or
wherein the local display unit (14) is further designed to display the angle of rotation; and/or
wherein the local battery (14) is further designed to supply energy to the rotation angle sensor (24).

3. The rotary base (2) according to any of the preceding claims,
wherein the rotary base (2) is interchangeable between different positions of the motor vehicle measuring site or the motor vehicle lifting platform, without cable removal and cabling; and/or
wherein the rotary base (2) can be removed without cable removal and can be installed at a position of the motor vehicle measuring site or the motor vehicle lifting platform without cabling.

4. The rotary base (2) according to any of the preceding claims,
wherein the local display unit, the local battery and the local transmitter unit are accommodated in a common housing (14); and/or
wherein the local display unit or the housing (14) is arranged on the outside of the base member (4) relative to the motor vehicle measuring site or the motor vehicle lifting platform; and/or
wherein the local display unit or the housing (14) is arranged between two handles (12) on the outside of the base member (4) relative to the motor vehicle measuring site or the motor vehicle lifting platform.

5. The rotary base (2) according to any of the preceding claims,
wherein the local display unit (14) is designed as an LCD or OLED display; and/or
wherein the local display unit (14) is designed as a single-colour display and/or as a multi-display display.

6. The rotary base (2) according to any of the preceding claims,
wherein the local transmitting unit (14) is designed to transmit the measured vertical wheel force and/or the angle of rotation/steering angle on at least one operating frequency to a unit of a wheel alignment measurement device;
wherein the operating frequency is in particular an operating frequency of 433 MHz, 915 MHz, 920 MHz or 2.4 GHz.

7. The rotary base (2) according to any of the preceding claims,
wherein the local transmitter unit (14) is designed such that different operating frequencies can be selected at which the measured vertical wheel force and/or the angle of rotation/steering angle is sent to a unit of a wheel alignment measurement device; and
the selectable operating frequencies are in particular two or more of the operating frequencies 433 MHz, 915 MHz, 920 MHz and 2.4 GHz.

8. A wheel alignment measurement device, comprising
a motor vehicle measuring site or a motor vehicle lifting platform,
at least one measuring head per side of the motor vehicle measuring site or the motor vehicle lifting platform, which is arranged and designed to produce images of the wheels of the motor vehicle or of targets arranged on the wheels of the motor vehicle;
wherein a rotary base (2) according to any of the preceding claims is arranged at at least one vehicle wheel position, in particular at at least the two front vehicle wheel positions;
wherein the wheel alignment measurement device is designed such that it determines chassis-specific data such as geometric driving axis, camber, toe and wheel offset from these images; and
that it determines from the vertical wheel force values received from the rotary bases (2) at least one of the values selected from the group consisting of weight per wheel, weight distribution per axle, difference between front and rear, weight distribution per side, difference between left and right, crossover weight, crossover weight in percent, wedge, wedge in percent, total weight, and current centre of gravity of the entire vehicle, and includes said value in the wheel alignment.

9. The wheel alignment measurement device according to claim 8,
wherein the wheel alignment measurement device is further designed such that it determines the static weight distribution of the measured motor vehicle from the vertical wheel force values received from the rotary bases (2) and/or determines the centre of gravity of the measured motor vehicle and includes it directly in the wheel alignment for more precise determination of the chassis-specific data.

10. The wheel alignment measurement device according to claim 8 or 9,
wherein a rotary base (2) each with a rotation angle sensor (24) according to any of claims 3 to 8 is arranged at at least one vehicle wheel position, in particular at at least the two front vehicle wheel positions;
wherein the wheel alignment measurement device is further designed such that the rotation angle value or steering angle value received from the at least one rotary base (2) is included in the wheel alignment.

## Revendications

1. Bâti tournant (2) destiné à la mesure de châssis pour un poste de mesure de véhicule automobile ou pour un pont élévateur de véhicule automobile, présentant
une base (4) ;
une plaque tournante (8) pouvant tourner par rapport à la base (4), permettant de supporter une roue de véhicule ; et
le bâti tournant (2) étant mobile et non câblé, avec une unité d'affichage locale (14) et avec une batterie locale pour l'alimentation électrique de l'affichage ;
**caractérisé en ce que**
le bâti tournant (2) présente un dispositif de pesage (18) pour mesurer la force d'appui de la roue du véhicule ;
le bâti tournant (2) présente une unité d'émission locale pour l'envoi par radio de la force d'appui mesurée de la roue à une unité d'un dispositif de mesure de châssis ;
l'unité d'affichage locale (14) est également conçue pour afficher la force d'appui mesurée de la roue ;
la batterie locale est également conçue pour alimenter en énergie le dispositif de pesage et l'unité d'émission locale ;
le dispositif de pesage est réalisé sous la forme de deux capteurs à poutre (18) disposés sur des faces opposées de la base, en particulier sur les faces avant et arrière à l'intérieur de la base (4), qui s'étendent sur une grande partie de la face intérieure de la base (4) ; et
les capteurs à poutre (18) disposent en particulier chacun de deux points d'appui.

2. Le bâti tournant (2) selon la revendication 1,
dans lequel le bâti tournant (2) dispose en outre d'un capteur d'angle de rotation (24) qui est conçu pour déterminer l'angle de rotation de la plaque tournante (8) par rapport à la base ou l'angle de braquage de la roue du véhicule supportée par la plaque tournante (8) ; et/ou
dans lequel le capteur d'angle de rotation (24) est réalisé comme un encodeur disposé au centre ; et/ou
dans lequel l'unité d'émission locale (14) est en outre réalisée de manière à envoyer l'angle de rotation à une unité d'un dispositif de mesure de châssis ; et/ou
dans lequel l'unité d'affichage locale (14) est en outre réalisée de manière à afficher l'angle de rotation ; et/ou
dans lequel la batterie locale (14) est en outre réalisée de manière à fournir de l'énergie au capteur d'angle de rotation (24).

3. Le bâti tournant (2) selon l'une quelconque des revendications précédentes,
dans lequel le bâti tournant (2) peut être déplacé entre différentes positions du poste de mesure de véhicule automobile ou du pont élévateur de véhicule automobile, sans débranchement ni rebranchement ; et/ou
dans lequel le bâti tournant (2) peut être enlevé sans être débranché et peut être installé sans être rebranché à une position du poste de mesure de véhicule automobile ou du pont élévateur de véhicule automobile.

4. Le bâti tournant (2) selon l'une quelconque des revendications précédentes,
dans lequel l'unité d'affichage locale, la batterie locale et l'unité d'émission locale sont logées dans un boîtier commun (14) ; et/ou
dans lequel l'unité d'affichage locale ou le boîtier (14) est situé(e) à l'extérieur de la base (4) par rapport au poste de mesure de véhicule automobile ou au pont élévateur de véhicule automobile ; et/ou
dans lequel l'unité d'affichage locale ou le boîtier (14) est disposée entre deux poignées (12) sur l'extérieur de la base (4), par rapport au poste de mesure de véhicule automobile ou au pont élévateur de véhicule automobile.

5. Le bâti tournant (2) selon l'une quelconque des revendications précédentes,
dans lequel l'unité d'affichage locale (14) est réalisée sous forme d'écran LCD ou OLED ; et/ou
dans lequel l'unité d'affichage locale (14) est réalisée sous forme d'écran monochrome et/ou d'écran multi-affichage.

6. Le bâti tournant (2) selon l'une quelconque des revendications précédentes,
dans lequel l'unité d'émission locale (14) est réalisée de manière à transmettre la force d'appui mesurée de la roue et/ou l'angle de rotation/l'angle de braquage à une unité d'un dispositif de mesure de châssis sur au moins une fréquence de travail ;
dans lequel la fréquence de travail est en particulier une fréquence de travail de 433 MHz, 915 MHz, 920 MHz ou 2,4 GHz.

7. Le bâti tournant (2) selon l'une quelconque des revendications précédentes,
dans lequel l'unité d'émission locale (14) est réalisée de manière à ce que différentes fréquences de travail puissent être sélectionnées, sur lesquelles la force d'appui mesurée de la roue et/ou l'angle de rotation/l'angle de braquage sont envoyés à une unité d'un dispositif de mesure de châssis ; et
dans lequel les fréquences de travail sélectionnables sont en particulier deux ou plusieurs des fréquences de travail de 433 MHz, 915 MHz, 920 MHz et 2,4 GHz.

8. Dispositif de mesure de châssis présentant
un poste de mesure de véhicule automobile ou un pont élévateur de véhicule automobile,
au moins une tête de mesure par côté du poste de mesure de véhicule automobile ou du pont élévateur de véhicule automobile, disposée et réalisée de manière à effectuer des prises de vue des roues du véhicule automobile ou de cibles disposées sur les roues du véhicule automobile ;
dans lequel un bâti tournant (2) selon l'une quelconque des revendications précédentes est respectivement disposé au moins en une position de roue du véhicule, en particulier au moins aux deux positions de roue avant du véhicule ;
le dispositif de mesure de châssis étant réalisé de manière à
déterminer, à partir de ces prises de vue, des données spécifiques au châssis, telles que l'axe de déplacement géométrique, le carrossage, le pincement et le déport des roues ; et
à déterminer, à partir des valeurs de force d'appui de roue reçues par les bâtis roulants (2), au moins l'une des valeurs qui est choisie dans le groupe et l'intègre à la mesure du châssis : poids par roue, répartition du poids par essieu, différence entre l'avant et l'arrière, répartition du poids par côté, différence entre la gauche et la droite, poids croisé, poids croisé en pourcentage, wedge, wedge en pourcentage, poids total et centre de gravité actuel de l'ensemble du véhicule.

9. Le dispositif de mesure de châssis selon la revendication 8,
dans lequel le dispositif de mesure de châssis est en outre réalisé de manière à déterminer, à partir des valeurs de force d'appui des roues reçues par les bâtis tournants (2), la répartition statique du poids du véhicule automobile mesuré et/ou à définir le centre de gravité du véhicule automobile mesuré et à l'intégrer directement dans la mesure des essieux pour une détermination plus précise des données spécifiques au châssis.

10. Le dispositif de mesure de châssis selon la revendication 8 ou 9,
dans lequel un bâti tournant (2) avec un capteur d'angle de rotation (24) selon l'une quelconque des revendications 3 à 8 est disposé au moins en une position de roue de véhicule, en particulier au moins aux deux positions de roue avant du véhicule ;
dans lequel le dispositif de mesure de châssis est en outre réalisé de manière à ce que la valeur de l'angle de rotation ou de l'angle de braquage reçue par le bâti tournant (2), un au moins, soit intégrée à la mesure de l'essieu.
